# EUROPEAN PATENT APPLICATION

(11) **EP 2 955 132 A1**
(43) Date of publication of application: **16.12.2015**
(21) Application number: 14171772.8
(22) Date of filing: 10.06.2014
(51) Int. Cl.: B65D 90/04, B65G 11/16

(54) **A wear plate, a method for producing the same and a bulk material handling device**

(71) Applicant: Sysi Oy, 01530 Vantaa (FI)
(72) Inventor: Viinanen, Petteri, 01530 Vantaa (FI); Lehtinen, Teppo, 01530 Vantaa (FI)
(74) Representative: Seppo Laine Oy

(57) **Abstract**

The present invention provides a wear plate for a bulk material handling device, the condition of which wear plate is easy to determine remotely. The novel wear plate (10) includes a base plate (3) and an abrasion-resistant element (1), which is superposed on the base plate (3). An electrical conductor (4) is arranged between the base plate (3) and abrasion-resistant element (1) so as to indicate whether or not the abrasion-resistant element (1) is intact.

## Description

### FIELD OF THE INVENTION

The present invention relates to material handling equipment. In particular, the invention relates to wear plates used in belt conveyor chutes and silos for bulk material handling.

### BACKGROUND ART

Wear plates are widely used in bulk material handling applications in process industries and in the logistic chain thereof. Wear plates are particularly used to protect machines and structures from wear that is caused by transferred material hitting and sliding on the structures for transporting bulk material, for example chutes, skirt boards and various silos and bins. CN 201586533, for example, discloses such a wear plate including highly abrasion-resistant materials, such as ceramics. Typical application locations for wear plates include mines, ports and terminals, refineries, steel mills, power stations and other industrial plants where bulk materials are handled.

The life span of wear plates varies significantly depending on the hostility of the application environment. Due to said high variance, it is often difficult if not impossible to determine, how long a particular wear plate may be used until it has to be replaced. So far the problem of determining the remaining life span of a wear plate has been solved by visual inspection. Since wear plates are often installed in locations that are very difficult to reach or even see, the inspection is expensive and sometimes dangerous. In more severe cases, production facilities may even be shut down for inspection.

It is therefore an aim of the present invention to provide a solution to the problem of protecting a bulk material handling device in such a way that the condition of the protection mechanism is easy to determine.

### SUMMARY

The aim of the present invention is achieved with aid of a novel wear plate for a bulk material handling device. The wear plate includes a substrate and an abrasion-resistant element, which is superposed on the substrate. An electrical conductor is arranged between the substrate and abrasion-resistant element so as to indicate whether or not the abrasion-resistant element is intact thus indicating the remaining life span.

More specifically, the wear element according to the present invention is characterized by the characterizing portion of claim 1.

The aim is on the other hand achieved with aid of a bulk material handling device including such a wear plate.

Moreover, the aim is achieved with a novel method of producing such a wear plate, in which method:
- sacrificial material is provided to a fixture for forming a sacrificial portion of an abrasion-resistant element,
- a layer of shock absorption material is provided to bind the sacrificial material and for forming a compression layer of the abrasion-resistant element,
- an electrical conductor is installed on the compression layer,
- a substrate is provided on the electrical conductor, and
- the resulted lamellar structure is cured so as to bond the layers to each other.

Considerable benefits are gained with aid of the present invention. By arranging an electrical conductor under the abrasion-resistant element, any disturbance in the conductivity of the conductor indicates damage in the abrasion-resistant element, whereby it may be concluded that the wear plate has reached the end of its life span. With the integrated electrical conductor acting as a sensor, the condition information of the wear is made available and easily accessible outside of the bulk handling device or remotely from a control room of the plant, for example.

### BRIEF DESCRIPTION OF DRAWINGS

In the following, exemplary embodiments of the invention are described in greater detail with reference to the accompanying drawings in which:
Fig. 1 presents a cross-section view of a wear plate according to one embodiment, and
Fig. 2 presents a top elevation sketch view showing the wear plate from above with the outline of the electrical conductor sketched out on the plate.

### DETAILED DESCRIPTION OF PREFERRED EMBODIMENTS

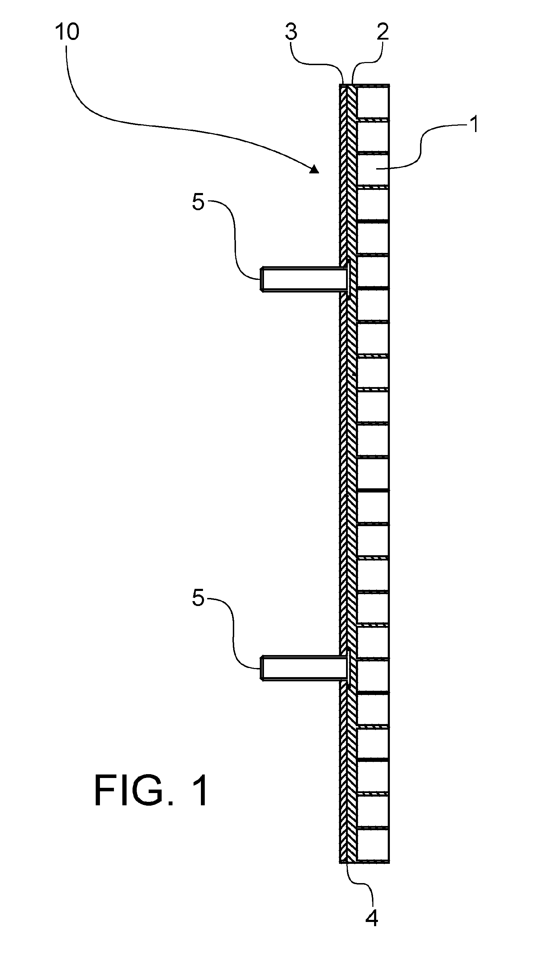

Let us turn first to Fig. 1, which shows the construction of a wear plate 10 according to one embodiment. As may see from the drawing, the wear plate 10 includes a base plate 3, which acts as a substrate for the construction. The base plate 3 may be made of any suitable stiff material such as steel of various grades or various types of magnets, when magnetic force is utilized for attaching the wear plate. Arranged parallel to the base plate 3 is an abrasion-resistant element 1, which has an integrated compression layer 2 for attachment to the base plate 3. The compression layer 2 is preferably made from an elastic material, such as rubber, or shock absorption material, the curing or vulcanizing temperature of which is preferably below 300 °C. The abrasion-resistant element 1 typically includes sacrificial material, which withstands highly abrasive circumstances. The sacrificial material may be for example, ceramic, metal, preferably steel, rubber or plastic or any combination thereof. In the shown example, the sacrificial material is embedded as cylindrical pieces into the receptive compression layer 2, which acts as frame for the abrasion-resistant element 1.

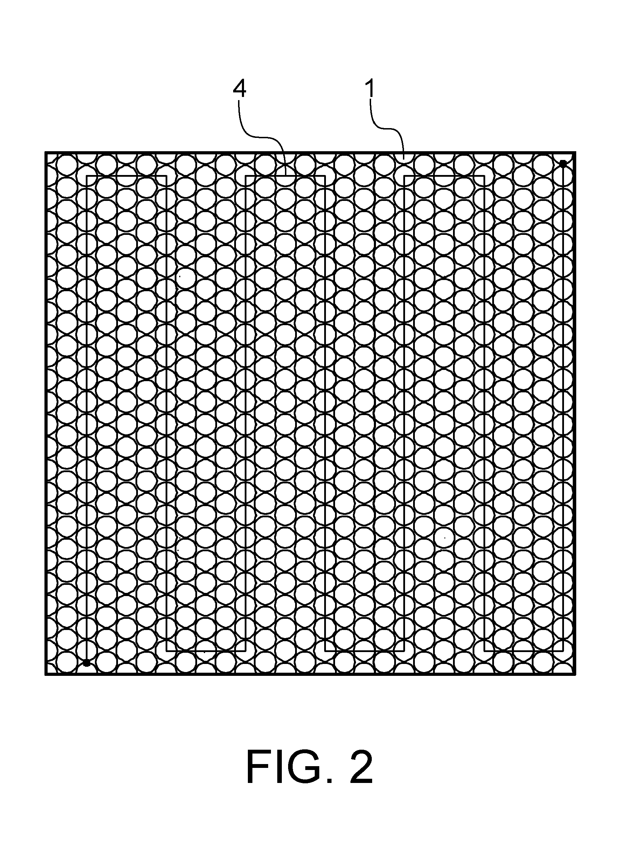

Arranged between the base plate 3 and the abrasion-resistant element 1 is a conductor 4 for carrying an electric signal. The electrical conductor 4 may be, for example, a steel wire, which is isolated by a glass fibre layer. It is advisable to isolate the conductors from each other for preventing false signals. As best shown in Fig. 2, the electrical conductor 4 is arranged to run within the wear plate 10 so as to cover the majority of the area of the wear plate 10. In the example shown in Fig. 2, the terminals of the electrical conductor 4 are shown as black circles at the top right and bottom left corners of the wear plate 10. Said terminal ends of the electrical conductors are attached to connectors (not shown) arranged on the periphery of the wear plate 10 for connection to an external display device or condition monitoring system. The pattern of the electrical conductor 4 is a so called zig zag pattern. Instead of an orthogonal zig zag pattern as shown in Fig. 2, the electrical conductor 4 may generally speaking be arranged into an arbitrary pattern, such as an oval, twirl, circle or similar. Also, the ends of the electrical conductor 4, may alternatively terminate to the same conductor (not shown). Alternatively, the conductor pattern can be formed by a closed end pair cable, where the conductors are isolated from each other and connected to each other at one end. The end of the life span of the wear plate with this embodiment may be detected as a broken electric loop.

The wear plate 10 may also be equipped with an integrated affixer 5 for attaching the wear plate 10 to a host bulk material handling device (not shown), such as a slide chute. The affixer 5 is attached to the base plate 3 and arranged to extend away from the abrasion-resistant element 1. The affixer 5 includes a threaded protrusion, i.e. a master tap, which terminates to a flange. The flange is fixed between the base plate 3 and abrasion-resistant element 1 such that the threaded protrusion extends through an opening in the base plate 3 and away from the abrasion-resistant element 1.

A wear plate 10 as described above may be produced by as follows. Firstly, the sacrificial material is provided to a fixture to form the sacrificial portion of the abrasion-resistant element 1. The material may be ceramic, rubber, hardened steel or similar and it may be provided with a vast variety of different shapes, such as cylinders as depicted in the Figs. or one or several plate layers. The fixture holding the abrasion-resistant material may be a mould, jig or any suitable fixture capable of holding an array or an arbitrarily arranged plurality of abrasion-resistant material. Surface topography and chemistry of the wear resistant material may require pretreatment and/or specific adhesive material for the layer to achieve good surface wetting and bonding. Materials, which are tailored for the compression layers, may not provide sufficient bonding force and aging properties for abrasion-resistant layer. Next, a compression layer 2 is formed on the sacrificial material by providing rubber or a sheet of another shock absorption material on top of the sacrificial material. The compression layer 2 may be formed of a single layer or several layers of shock absorption material, wherein each layer may be of the same or different material.

After or during the formation of the compression layer 2, the electrical conductor 4 is installed. The electrical conductor 4 may be installed on the compression layer 2 or between several sub-layers of the shock absorption material forming the compression layer 2. The electrical conductor 4 is preferably superposed on the compression layer 2 as a pre-shaped element. Connection wires or cable of the conductor pattern is protruded through one or several holes (not shown) in the base plate 3 or on the side of the compression layer 2. After the electrical conductor 4 is in place, the base plate 3 is superposed on the already established lamellar structure 1, 2, 4. If the wear plate 10 is made to include affixers 5, they are positioned on the compression layer 2 before providing the base plate 3. In most cases an adhesive material is used between the compression layer 2 and the base plate 3. The base plate 3 is preferably attached to the same fixture as the sacrificial material to prevent relative movement between the components of the wear plate 10.

After the components 1 - 5 of the wear plate 10 have been assembled in the fixture, the entire wear plate 10 may be cured under pressure and relatively high temperature, such as up to pressure of 8 ... 10 bar and/or temperature of 150 ... 250 °C. Elevated pressure and temperature is particularly advisable, when rubber is used as an adhesive and as a compression layer material. The pressure and temperature depend on used materials and construction. Some technical materials can be cured in room temperature and under normal air pressure especially, when materials are used that require specific adhesive materials to achieve sufficient bonding force and low processing temperatures.

**TABLE 1: LIST OF REFERENCE NUMBERS.**

| **Number** | **Part** |
|---|---|
| 1 | abrasion-resistant element |
| 2 | compression layer |
| 3 | base plate |
| 4 | conductor |
| 5 | affixer |
| 10 | wear plate |

## Claims

1. A wear plate (10) for a bulk material handling device, the wear plate (10) comprising:
- a base plate (3) and
- an abrasion-resistant element (1) superposed on the base plate (3), **characterized by** an electrical conductor (4) arranged between the base plate (3) and abrasion-resistant element (1).

2. The wear plate (10) according to claim 1, wherein the electrical conductor (4) is configured to carry an electric signal.

3. The wear plate (10) according to claim 1 or 2, wherein the electrical conductor (4) is a steel wire, which is isolated by a glass fibre sleeve.

4. The wear plate (10) according to any of the preceding claims, wherein the abrasion-resistant element (1) comprises a compression layer (2), one side of which faces the base plate (3) and the opposing side of which comprises sacrificial material selected from any one or any combination of a group consisting of:
- ceramic,
- steel,
- rubber and
- plastic.

5. The wear plate (10) according to claim 4, wherein the compression layer (2) is made of rubber.

6. The wear plate (10) according to claim 6 or 7, wherein the compression layer (2) is made of material with a curing or vulcanizing temperature at most 300 °C.

7. The wear plate (10) according to any of the preceding claims, wherein the base plate (3) is made of steel.

8. The wear plate (10) according to any of the preceding claims, wherein the wear plate (10) comprises at least one affixer (5) attached to the base plate (3) and arranged to extend away from the abrasion-resistant element (1).

9. The wear plate (10) according to claim 8, wherein the at least one affixer (5) is a threaded protrusion terminating to a flange, which is fixed between the base plate (3) and abrasion-resistant element (1).

10. A bulk material handling device, **characterized by** a wear plate (10) according to any of the preceding claims.

11. The bulk material handling device according to claim 10, wherein the bulk material handling device is a belt conveyor.

12. A method for producing a wear plate (10), the method comprising the steps of:
- providing sacrificial material to a fixture for forming a sacrificial portion of an abrasion-resistant element (1),
- providing a layer of shock absorption material to bind the sacrificial material and for forming a compression layer (2) of the abrasion-resistant element (1),
- installing an electrical conductor (4) on the compression layer (2),
- providing a base plate (3) on the electrical conductor (4), and
- curing the resulted lamellar structure so as to bond the layers to each other.

13. The method according to claim 12, wherein the sacrificial material is selected from any one or any combination of a group consisting of:
- ceramic,
- steel,
- rubber and
- plastic

14. The method according to claim 12 or 13, wherein:
- in the step of providing a base plate (3), using adhesive to attach the base plate (3) to the compression layer (2) and electrical conductor (4) and fixing the base plate (3) to said fixture, and wherein
- in the step of curing, using elevated temperature and pressure to advance the curing.
